# EUROPEAN PATENT SPECIFICATION

(11) **EP 3 438 990 B1**
(45) Date of publication and mention of the grant of the patent: **29.09.2021**
(21) Application number: 18184161.0
(22) Date of filing: 18.07.2018
(51) Int. Cl.: G21C 3/32, G21C 3/334, G21C 17/022, G21C 19/307, G21F 9/00, G21C 3/07

(54) **METHOD OF REPAIRING FUEL ASSEMBLY, METHOD OF PRODUCING FUEL ASSEMBLY, AND FUEL ASSEMBLY**
VERFAHREN ZUR REPARATUR EINES BRENNSTABBÜNDELS, VERFAHREN ZUR HERSTELLUNG EINES BRENNSTABBÜNDELS UND BRENNSTABBÜNDEL
PROCÉDÉ DE RÉPARATION D'UN ENSEMBLE À COMBUSTIBLE, PROCÉDÉ DE PRODUCTION D'UN ENSEMBLE À COMBUSTIBLE ET ENSEMBLE COMBUSTIBLE

(30) Priority: 31.07.2017 JP 2017148073; 07.06.2018 JP 2018109357
(43) Date of publication of application: 06.02.2019
(73) Proprietor: Kabushiki Kaisha Toshiba, Minato-ku Tokyo 105-8001 (JP); Toshiba Energy Systems & Solutions Corporation, Saiwai-ku Kawasaki-shi Kanagawa 2120013 (JP)
(72) Inventor: Hara, Takahiro, Kawasaki-shi, Kanagawa 212-0013 (JP); Shibasaki, Osamu, Kawasaki-shi, Kanagawa, 212-0013 (JP); Okamura, Masato, Kawasaki-shi, Kanagawa 212-0013 (JP); Horayama, Yusuke, Kawasaki-shi, Kanagawa 212-0013 (JP)
(74) Representative: AWA Sweden AB

(56) References cited:
- WO-A1-2014/193549
- DE-A1-102004 059 968
- FR-A1- 2 936 088
- JP-A- 2006 153 607
- US-A1- 2015 063 523

## Description

### FIELD

Embodiments described herein relate to a method of repairing a fuel assembly.

### BACKGROUND

One of the important problems inherent to nuclear power plants having one or more boiling water type nuclear reactors is how to reduce the radiation exposure levels of the operators of the nuclear reactors particularly at the time of periodical inspections.

In nuclear power plants, radioactive substances are produced as neutrons are irradiated on elements such as cobalt and nickel in the reactor cores out of all the metals that are employed to form the power plant. Radioactive substances are moved into the cooling water circulating in the nuclear power plant and part of the radioactive substances is taken up as oxides thereof to the inner surfaces of the pipes through which the cooling water that contains radioactive substances flows. The taken up radioactive substances are major sources of radiation exposures.

Water quality control techniques such as "Ni/Fe ratio control" and "extremely low iron-high nickel control" have been proposed to reduce the radiation exposure levels in nuclear power plants.

With "Ni/Fe ratio control", the feed-water introduced into the inside of the nuclear reactor is controlled for the iron concentration of the feed-water so as to realize an iron excess state relative to nickel in the reactor water introduced into the inside of the nuclear reactor. In an iron excess state, nickel ferrite (NiFe₂O₄), which is a composite oxide of nickel and iron, and cobalt ferrite, which is a composite oxide of cobalt and iron, are formed on the surfaces of the fuel rods that contact the reactor water. These composite oxides partly turn to radioactive substances as neutrons are irradiated onto them. The above-cited composite oxides represent a low solubility. However, there arise instances where the amount of elution of such composite oxides rises and the amount of elution of radioactive substances also rises when the specification of nuclear fuel is altered to in turn change the environment surrounding the surfaces of the fuel rods.

To cope with such situations, "extremely low iron-high nickel control" has been proposed to replace "Ni/Fe control". With "extremely low iron-high nickel control", a technique of concentration adjustment is employed to realize a nickel excess state relative to iron in the reactor water. The operation of concentration adjustment is typically executed by removing the metal components or by injecting water according to the measured concentrations of the metal components. More specifically, the operation of concentration adjustment is executed to give rise to a state where the iron concentration in the feed-water is not higher than 0.1 ppb and the nickel concentration in the reactor water exceeds 0.2 ppb. Then, as a result, a dense nickel ferrite (NiFe₂O₄) phase is produced on the surfaces of the pipes as protection coating film so that, for instance, the occurrence of the phenomenon that radioactive substances adhere to the surfaces of fuel rods that contact reactor water is suppressed.
It is known from JP 2006 153607 A to use TiO₂ as additive to reactor cooling water. The Nickel content in the cooling water is not addressed in this document.

However, with "extremely low iron-high nickel control", there can be instances where it is difficult to satisfactorily reduce the radioactivity concentration in reactor water. More specifically, with "extremely low iron-high nickel control", metal oxides such as nickel oxide (NiO) and cobalt oxide (CoO) that represent a high solubility relative to water adhere to the surfaces of the fuel assembly (including fuel rods) that contacts reactor water in addition to the nickel ferrite (NiFe₂O₄) phase. For this reason, there can be instances where metal oxides such as nickel oxide and cobalt oxide become to contain radioactive substances and subsequently they are dissolved in reactor water. Then, as a result, instances where the radioactivity concentration in reactor water rises can take place.

Thus, a problem to be solved by the present invention is to provide a method of repairing a fuel assembly.

### BRIEF DESCRIPTION OF THE DRAWINGS

FIG. 1 is schematic illustration of a principal part of a nuclear plant according to a embodiment.
FIG. 2 is a schematic cross-sectional view of a principal part of a fuel assembly to be loaded in a reactor core in a nuclear power plant according to the embodiment.
FIG. 3 is a schematic illustration of how a fuel assembly works for the water quality control of a nuclear power plant according to the embodiment a method of repairing such a fuel assembly and a method of producing such a fuel assembly.
FIG. 4 is also a schematic illustration of how a fuel assembly works for the water quality control of a nuclear power plant according to the embodiment, a method of repairing such a fuel assembly and a method of producing such a fuel assembly.

### DETAILED DESCRIPTION

In an embodiment, a method of repairing a fuel assembly in a nuclear reactor, comprising: applying a compound containing at least one substance selected from the group consisting of TiO₂, TiCl₄, Ti(OH)₄, TiF₄, TiCl₃, TiN, TiC, Ti(SO₄)₂, Ti₃O₅, Ti(NO₃)₄, Al₃O₃, Al(OH)₃, AlCl₃, Al(NO₃)₃, Al₂(SO₄)₃, WO₂, WO₃, WC₁₆, WF₆, (NH₄)₁₀W₁₂O₄₁■5H₂O, H₂WO₄ and H₄WO₅ to a surface of a fuel rod of the fuel assembly.

### (A) Overall Configuration of Nuclear Power Plant

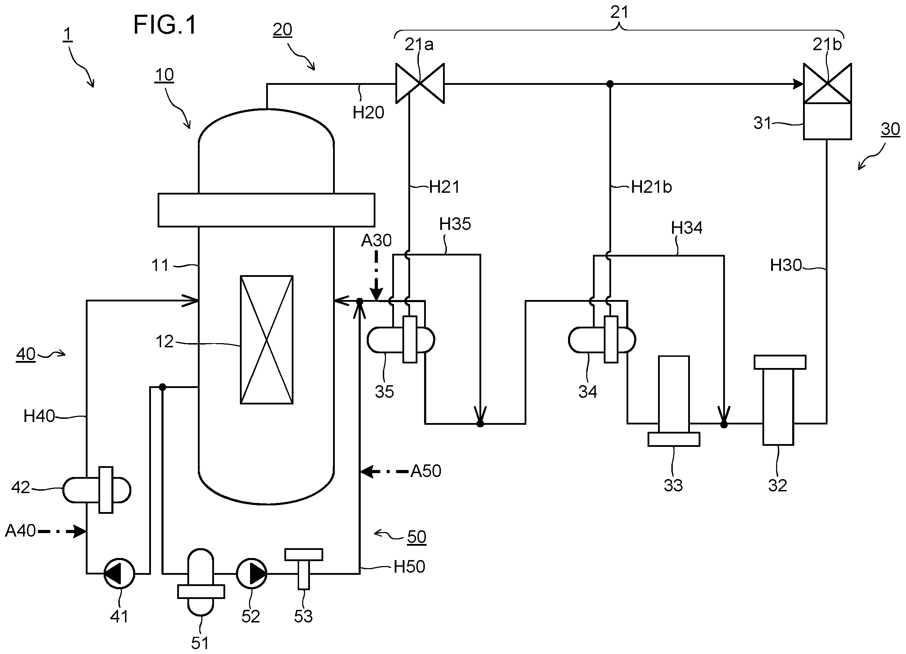

A principal part of a nuclear power plant according to a embodiment is applicable will be described below by referring to FIG. 1.

As illustrated in FIG. 1, the nuclear power plant 1 includes a nuclear reactor 10, a main steam system 20, a condensate feed water system 30, a residual heat removal system 40 and a cooling water clean-up system 50. The above-described components of the nuclear power plant 1 are formed by using metal materials such as stainless steel and Ni-base alloy. The components that form the nuclear power plant 1 will sequentially be described in detail below.

The nuclear reactor 10 includes a pressure vessel 11, and a reactor core 12 and the reactor core 12 is contained in the pressure vessel 11. In the embodiment, the nuclear reactor 10 is a boiling water type nuclear reactor and the water (reactor water) introduced into the inside of the pressure vessel 11 is heated by the heat generated in the reactor core 12 to turn into steam.

The main steam system 20 includes main steam system piping H20, and it is so arranged that the steam produced in the nuclear reactor 10 is supplied to the steam turbine 21 as working medium by way of the main steam system piping H20. In the embodiment, the steam turbine 21 is applicable typically includes a high pressure turbine 21a and a low pressure turbine 21b and the produced steam firstly works in the high pressure turbine 21a and subsequently works in the low pressure turbine 21b. As the high pressure turbine 21a and the low pressure turbine 21b are driven, the generator (not illustrated) is driven to generate electricity. The steam discharged from the low pressure turbine 21b is condensed and liquefied in a condenser 31.

The condensate feed water system 30 includes condensate feed water system piping H30, and the water (condensate) produced as a result of condensation in the condenser 31 is supplied to the nuclear reactor 10 by way of the condensate feed water system piping H30. More specifically, in the condensate feed water system 30, the impurities contained in the water produced as a result of condensation in the condenser 31 are sequentially removed by a condensate filer 32 and a condensate desalter 33. Then, the water (feed-water) is heated sequentially by a low pressure feed-water heater 34 and a high pressure feed-water heater 35 and subsequently supplied to the nuclear reactor 10. At the low pressure feed-water heater 34, the steam discharged from the high pressure turbine 21a is typically supplied to it as heat source medium by way of piping H21b and the drain water produced by heat exchange flows into the condensate feed water system piping H30 by way of a drain pipe H34. At the high pressure feed-water heater 35, on the other hand, the steam extracted from the high pressure turbine 21a is typically supplied to it as heat source medium by way of piping H21 and the drain water produced by heat exchange flows into the condensate feed water system piping H30 by way of a drain pipe H35.

The residual heat removal system 40 includes residual heat removal system piping H40, and a pump 41 and a heat exchanger 42 are arranged here. The residual heat removal system 40 is installed in order to remove the heat generated from the reactor core 12 of the nuclear reactor 10 after a shutdown of the nuclear reactor 10. At the residual heat removal system 40, the water introduced from the nuclear reactor 10 into the residual heat removal system piping H40 is boosted by the pump 41 and then fed to the heat exchanger 42. Then, the water fed to the heat exchanger 42 by the pump is cooled in the heat exchanger 42 and subsequently returned to the nuclear reactor 10.

The cooling water clean-up system 50 includes cooling water clean-up system piping H50, and a heat exchanger 51, a pump 52 and a remover 53 (filter-desalter) are provided there. The cooling water clean-up system piping H50 is connected at one of the opposite ends thereof to the residual heat removal system piping H40 at a position of the piping H40 located at the upstream side relative to the pump 41. Additionally, the cooling water clean-up system piping H50 is connected at the other opposite end thereof to the condensate feed water system piping H30 at a position of the piping H30 located at the downstream side relative to the high pressure feed-water heater 35. At the cooling water clean-up system 50, the water fed into the cooling water clean-up system piping H50 is cooled by the heat exchanger 51. Then, the cooled water is boosted by the pump 52 and fed to the remover 53 and the impurities contained in the cooled water are removed by the remover 53. Subsequently, the temperature of the water is raised by a heat exchanger (not illustrated) and the water is then returned to the nuclear reactor 10 as cooling water.

### (B) Composition of Fuel Assembly 100

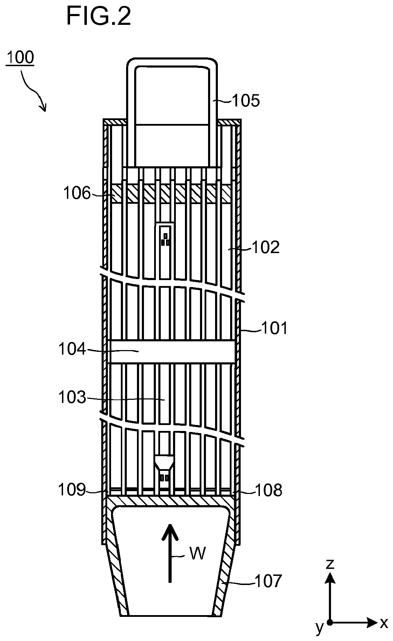

Now, a principal part of a fuel assembly 100 to be loaded in the reactor core 12 of the nuclear reactor 10 of the above-described nuclear power plant 1 will be described below by referring to FIG. 2. FIG. 2 schematically illustrates a cross-sectional view of the fuel assembly 100 taken along a vertical plane (xz plane).

As illustrated in FIG. 2, the fuel assembly 100 includes a channel box 101, fuel rods 102, a water rod 103, a fuel spacer 104, an upper tie plate 106 and a lower tie plate 107.

Of the fuel assembly 100, the channel box 101 is a tubular body typically made of a metal material. Although not illustrated, the channel box 101 is formed so as to typically represent a square cross section that orthogonally intersects the axis of the tube.

Each of the fuel rods 102 includes a cylindrical fuel cladding, which is made of a metal material, and nuclear fuel in the form of a plurality of pellets (not illustrated) is filled in the fuel cladding. The at least one water rod 103 is a tubular body typically made of a metal material. Thus, the bundle of the plurality of fuel rods 102 and the at least one water rod 103 are arranged in the inside of the channel box 101 to represent a square grid-like cross section.

The fuel spacer 104 is provided in order to hold the gaps separating the plurality of fuel rods 102 and the gaps separating the fuel rods 102 and the at least one water rod 103 in the axial direction to a constant value.

The upper tie plate 106 is arranged at the top end side of the channel box 101 to rigidly secure the fuel rods 102 and the water rod 103 at respective top end parts thereof. Additionally, the upper tie plate 106 is provided with a handle 105 formed on the upper surface thereof.

The lower tie plate 107 is arranged at the bottom end side of the channel box 101 to rigidly secure the fuel rods 102 and the water rod 103 at respective bottom end parts thereof. More specifically, the fuel rods 102 and the water rod 103 are rigidly secured to the network section 108 of the lower tie plate 107 by way of a lower end plug 109.

When the nuclear power plant is in operation, reactor water W flows into the channel box 101 of the fuel assembly 100 by way of the lower tie plate 107 and then it flows upward in the channel box 101. At this time, the reactor water W is boiled by the heat of the fuel rods 102 and turned into steam. Then, the produced steam flows out from the channel box 101 by way of the upper tie plate 106. Thereafter, the steam is supplied to the steam turbine 21 (see FIG. 1) as working medium.

### (C) Water Quality Control Method of Nuclear Power Plant

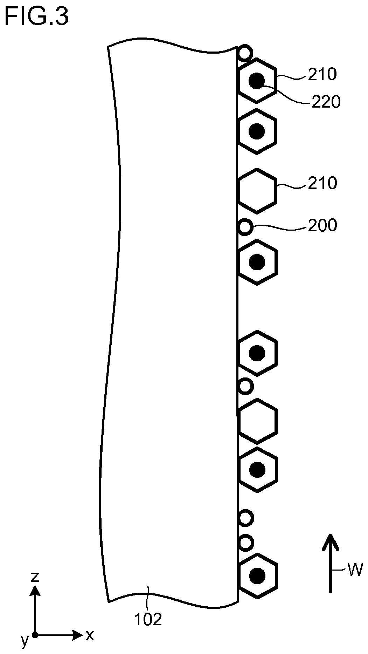

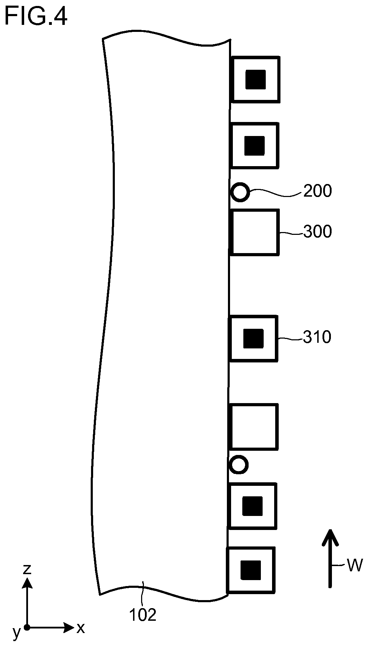

Now, a method of repairing a fuel assembly that works for the water quality control of a nuclear power plant, a method of producing a fuel assembly and a fuel assembly according to the embodiment will be described below by referring to FIGS. 3 and 4. Each of FIGS. 3 and 4 is an enlarged view of a surface part of a fuel assembly 100 that contacts reactor water W (cooling water). While each of FIGS. 3 and 4 illustrates the surface of a fuel rod 102 that the fuel assembly 100 includes, these illustrations are also applicable to the other members that the fuel assembly 100 includes.

When "extremely low iron-high nickel control" is put to use as water quality control method (to give rise to a state where the iron concentration in the feed-water is not higher than 0.1ppb and the nickel concentration in the reactor water exceeds 0.2 ppb), nickel ferrite 200 precipitates on the surface of the fuel rod 102 as illustrated in FIG. 3. At the same time, since nickel ions excessively exist in the reactor water W over the amount necessary to produce nickel ferrite 200, nickel oxide 210 also precipitates on the surface of the fuel rod 102. Additionally, cobalt oxide 220 also precipitates. Nickel oxide 210 and cobalt oxide 220 are typically produced on the surface of the fuel rod 102 as particulate mixture of the oxides and also produced as isolated oxide particles on the surface of the fuel rod 102.

As described above, both nickel oxide 210 and cobalt oxide 220 are metal oxides representing a high solubility relative to water. Therefore, when nickel oxide 210 and cobalt oxide 220 are dissolved in the reactor water W in a state where they contain radioactive substances, the concentration of radioactivity in the reactor water W rises.

For this reason, according to the embodiment, low solubility compounds 310 that are thermodynamically more stable than nickel oxide 210 and cobalt oxide 220 and represent a low solubility relative to the reactor water W are formed on the surface of the fuel rod 102.

More specifically, a process for forming such low solubility compounds 310 by causing nickel oxide 210 and cobalt oxide 220 to react with a stabilizing agent 300 is executed for this purpose.

In the embodiment, for example, titanium oxide (TiO₂) is employed as the stabilizing agent 300.

Then, chemical reactions between nickel oxide 210 (NiO) and titanium oxide (TiO₂), which is the stabilizing agent 300, as expressed by reaction formulas (1) and (2) spontaneously take place in the inside of the nuclear reactor 10. As a result, nickel titanate (NiTiO₃, Ni₂TiO₄) is produced as low solubility compound 310.

NiO + TiO₂ → NiTiO₃ ... formula (1)

2NiO + TiO₂ → Ni₂TiO₄ ··· formula (2)

In addition, chemical reactions between cobalt oxide 220 (CoO) and titanium oxide (TiO₂), which is the stabilizing agent 300, as expressed by reaction formulas (3) and (4) spontaneously take place in the inside of the nuclear reactor 10. Then, as a result, cobalt titanate (CoTiO₃, Co₂TiO₄) is produced as low solubility compound 310.

CoO + TiO₂ → CoTiO₃ ··· formula (3)

2CoO + TiO₂ → Co₂TiO₄ ··· formula (4)

The stabilizing agent 300 to be used for this purpose preferably is a compound whose composition includes at least an element selected from titanium (Ti), aluminum (Al) and tungsten (W).

More specifically, as the stabilizing agent 300, any of the titanium compounds that are listed below can suitably be used beside the above-described titanium oxide (TiO₂).

TiCl₄, Ti(OH)₄, TiF₄, TiCl₃, TiN, TiC, Ti(SO₄)₂, Ti₃O₅ and Ti(NO₃)₄

Additionally, as the stabilizing agent 300, any of the aluminum compounds and the tungsten compounds that are listed below can suitably be used.

Al₂O₃, Al(OH)₃, AlCl₃, Al(NO₃)₂, Al₂(SO₄)₃

WO₂, WO₃, WCl₆, WF₆, (NH₄)10W₁₂O₄ᵢ₁·5H₂O, H₂WO₄, H₄WO₅

For example, a chemical reaction between nickel oxide 210 (NiO) and aluminum oxide (AL₂O₃), which is the stabilizing agent 300, as expressed by reaction formulas (5) represented below spontaneously takes place in the inside of the nuclear reactor 10 to produce a low solubility compound 310 (NiAl₂O₄). Similarly, a chemical reaction between nickel oxide 210 (NiO) and tungsten trioxide (WO₃), which is the stabilizing agent 300, as expressed by reaction formulas (6) represented below spontaneously takes place in the inside of the nuclear reactor 10 to produce a low solubility compound 310 (NiWO₄).

NiO + Al₂O₃ → NiAl₂O₄ ··· formula (5)

NiO + WO₃ → NiWO₄ ··· formula (6)

Note that the standard Gibbs energy of formation ΔfG° at 280°C is -188.276 KJ/mol for NiO and -197.965 KJ/mol for CoO. On the other hand, with regard to the low solubility compound 310, the standard Gibbs energy of formation ΔfG° at 280°C is -1042.69 KJ/mol for NiTiO₃, -1061.255 KJ/mol for CoTiO₃, -1269.169 KJ/mol for Co₂TiO₄, -1696.177 KJ/mol for NiAl₂O₄ and -939.149 KJ/mol for NiWO₄. As seen from the above-cited values, the above-listed low solubility compounds 310 are thermodynamically more stable than nickel oxide 210 and cobalt oxide 220.

To form low solubility compounds 310 on the surface of the fuel assembly 100, typically on the surface of the fuel rod 102, firstly liquid containing the stabilizing agent 300 is to be prepared (liquid preparing step).

The prepared liquid containing the stabilizing agent 300 is a solution obtained by dissolving the stabilizing agent 300 in a solvent or a dispersion (suspension) obtained by dispersing the stabilizing agent 300 in a dispersion medium. For the liquid containing the stabilizing agent 300, the solvent or the dispersion medium is water. The content ratio of the stabilizing agent 300 is preferably not more than 10 mass% in view of intergranular stress corrosion cracking. The liquid containing the stabilizing agent 300 contains a binder for the purpose of improving the adhesiveness of the stabilizing agent 300. The binder is silica or polyorganosiloxane. The liquid preferably contains the binder by 0.01 to 2.5 mass% relative to the stabilizing agent 300 in view of adhesiveness and intergranular stress corrosion cracking. Additionally, when the liquid containing the stabilizing agent 300 is a dispersion (suspension), preferably a dispersant is added to the liquid in order to suppress agglomeration of the stabilizing agent 300. The dispersant is typically ammonia or carboxylic acid and the liquid preferably contains the dispersant by not more than 0.34 mass% relative to the stabilizing agent 300 in view of intergranular stress corrosion cracking.

Subsequently, the stabilizing agent 300 is made to adhere to the surfaces in the fuel assembly 100 such as the surfaces of the fuel rods 102 that the reactor water W (cooling water) contacts by applying the liquid containing the stabilizing agent 300 to the surfaces (liquid applying step). In this step, the stabilizing agent 300 is made to adhere to the surfaces typically by means of an application method, an immersion method, an injection method or the like.

When an application method is employed, the fuel assembly 100 is taken out from the reactor water when the nuclear power plant is shut down (taking out step) and liquid containing the stabilizing agent 300 is sprayed onto the surface of the fuel assembly or the surfaces of the fuel rods 102 so as to make the stabilizing agent adhere to the surface or the surfaces (spraying step). This method is applicable not only to the fuel assembly that has already been loaded in a nuclear reactor but also to a new fuel rod or a new fuel assembly before the fuel rod or the fuel assembly is loaded in a nuclear reactor. When this method is employed for a new fuel rod, it is not necessary to take out the fuel assembly from the nuclear reactor. Then, the new fuel rod or the new fuel assembly that is being immersed in cooling water is simply taken out from the cooling water and liquid containing the stabilizing agent is sprayed onto the surface thereof.

With an immersion method, the fuel rods 102 are or the fuel assembly is taken out from the reactor water when the nuclear power plant is shut down (tanking out step) and the fuel rods 102 are or the fuel assembly 100 is immersed in a bath that contains liquid containing the stabilizing agent 300 (immersing step). Then, the stabilizing agent 300 is caused to adhere to the surfaces of the fuel rods 102 by pulling up the fuel rods 102 or the fuel assembly 100 from the liquid in which the fuel rods 102 have or the fuel assembly 100 has been immersed. This method is applicable not only to the fuel assembly that has already been loaded in a nuclear reactor but also to a new fuel rod or a new fuel assembly before the fuel rod or the fuel assembly is loaded in a nuclear reactor. When this method is employed for a new fuel rod, it is not necessary to take out the fuel assembly from the nuclear reactor. Then, the new fuel rod or the new fuel assembly that is being immersed in cooling water is simply taken out from the cooling water, immersed in a bath holding liquid containing the stabilizing agent 300 in it and then pulled up from the bath.

When an injection method is employed, liquid that contains the stabilizing agent 300 is injected into the water circulating in the nuclear power plant 1 (also referred to as cooling water or reactor water) (adding step). More specifically, liquid that contains the stabilizing agent 300 is appropriately injected, for example, from the injecting position A30 of the condensate feed water system 30, from the injecting position A40 of the residual heat removal system 40 and also from the injecting position A50 of the cooling water clean-up system 50 as illustrated in FIG. 1. The injecting position A30 of the condensate feed water system 30 is located at the downstream side relative to the high pressure feed-water heater 35 on the condensate feed water system piping H30. The injecting position A40 of the residual heat removal system 40 is located between the pump 41 and the heat exchanger 42 on the residual heat removal system piping H40. The injecting position A50 of the cooling water clean-up system 50 is located at the downstream side relative to the remover 53 on the cooling water clean-up system piping H50.

During the period of steady-state operation, liquid that contains the stabilizing agent 300 is injected on a continuous basis so as to make the concentration of the stabilizing agent 300 in the water (cooling water) circulating in the nuclear power plant 1 not higher than 500 ppb in view of the water quality standard value. To the contrary, during the transient period of startup or shutdown, the operation of injecting liquid that contains the stabilizing agent 300 is so controlled as to make the concentration of the stabilizing agent 300 in the water (cooling water) circulating in the nuclear power plant 1 not higher than 10 ppm.

The concentration is adjusted typically by controlling the operation of the injection device (not illustrated) of the stabilizing agent 300 by means of the control unit (not illustrated) on the basis of the concentration of the stabilizing agent 300 as detected by the detector (not illustrated). When, for example, the concentration of the stabilizing agent 300 is higher than the predetermined level, the operation of injecting the stabilizing agent 300 is suspended. When, on the other hand, the concentration of the stabilizing agent 300 is lower than the predetermined level, the operation of injecting the stabilizing agent 300 is carried on.

After the stabilizing agent 300 adheres to the surface of the fuel assembly 100 as described above, a reaction between the stabilizing agent 300 and nickel oxide 210 and cobalt oxide 220 spontaneously takes place in the high temperature environment in the nuclear reactor 10. Thus, nickel and cobalt are oxidized as a result of corrosion of some of the structural members that constitute the nuclear power plant 1 and hence nickel oxide 210 and cobalt oxide 220 are produced as corrosion products. Then, the nickel oxide 210 and the cobalt oxide 220 react with the stabilizing agent 300 to produce the low solubility compounds 310.

### (D) Conclusion (Advantages)

As described above, according to the embodiment, the metal oxides (nickel oxide 210, cobalt oxide 220) that precipitate on part of the surface of the fuel assembly 100 that contacts the reactor water and the stabilizing agent 300 are made to react with each other to produce low solubility compounds 310. The solubility of the low solubility compound 310 relative to the reactor water is lower than the solubility of the metal oxides (nickel oxide 210, cobalt oxide 220) and the low solubility compounds 310 that contain radioactive substances are hardly dissolved in the reactor water. As the result, it is possible to suppress the rise of the concentration of radioactivity in the reactor water. Thus, according to the embodiment, the concentration of radioactivity in the reactor water can be reduced.

Particularly, when the reactor water contains nickel ions and the nickel concentration in the reactor water exceeds 0.2 ppb, highly soluble nickel oxide 210 is apt to precipitate as metal oxide. However, according to the embodiment, the nickel oxide 210 is chemically changed to a nickel compound that is a low solubility compound 310 by using the stabilizing agent 300 so that, even when the nickel concentration in the reactor water exceeds 0.2 ppb, it is possible to effectively suppress the rise of the concentration of radioactivity in the reactor water.

According to the embodiment, the stabilizing agent 300 is preferably a compound whose chemical composition includes at least an element selected from titanium, aluminum and tungsten. Then, according to the embodiment, a low solubility compound 310 can easily be formed.

### (E) Modifications

While nickel oxide 210 and cobalt oxide 220 are caused to react with the stabilizing agent 300 to produce a low solubility compound 310 in the above description of the embodiment, the embodiment is by no means limited to such a reaction. Low solubility compounds 310 can be produced by causing metal oxides other than nickel oxide 210 and cobalt oxide 220 (such as iron oxide, zinc oxide, etc.) to react with the stabilizing agent 300.

While certain embodiments have been described, these embodiments have been presented by way of example only, and are not intended to limit the scope of the inventions. Indeed, the novel embodiments described herein may be embodied in a variety of other forms.

## Claims

1. A method of repairing a fuel assembly in a nuclear reactor, comprising:
applying a compound containing at least one substance selected from the group consisting of TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ and H₄WO₅ to a surface of a fuel rod of the fuel assembly,
wherein the applying the compound comprises
providing cooling water around the fuel assembly, and
injecting liquid containing the compound into the cooling water,
wherein the cooling water contains over 0.2ppb Ni ion.

2. A method of repairing a fuel assembly in a nuclear reactor, comprising:
applying a compound containing at least one substance selected from the group consisting of TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ and H₄WO₅ to a surface of a fuel rod of the fuel assembly,
wherein the applying the compound comprises
removing the fuel assembly from cooling water in the nuclear reactor, and
spraying liquid containing the compound on the fuel assembly,
wherein the cooling water contains over 0.2ppb Ni ion.

3. A method of repairing a fuel assembly in a nuclear reactor, comprising:
applying a compound containing at least one substance selected from the group consisting of TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ and H₄WO₅ to a surface of a fuel rod of the fuel assembly,
wherein the applying the compound comprises
preparing liquid containing the compound in a bath,
removing the fuel assembly from cooling water in the nuclear reactor, and
immersing the fuel assembly into the liquid in the bath,
wherein the cooling water contains over 0.2ppb Ni ion.

## Patentansprüche

1. Verfahren zur Reparatur eines Brennstabbündels in einem Kernreaktor, das umfasst:
Aufbringen einer Verbindung, die mindestens einen Stoff enthält, der aus der Gruppe ausgewählt wird, die besteht aus TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ und H₄WO₅, auf einer Oberfläche eines Brennstabs des Brennstabbündels,
wobei das Aufbringen der Verbindung umfasst:
Bereitstellen von Kühlwasser um das Brennstoffbündel, und
Einspritzen von Flüssigkeit, die die Verbindung enthält, in das Kühlwasser, wobei das Kühlwasser über 0,2 ppb Ni-Ion enthält.

2. Verfahren zur Reparatur eines Brennstabbündels in einem Kernreaktor, das umfasst:
Aufbringen einer Verbindung, die mindestens einen Stoff enthält, der aus der Gruppe ausgewählt wird, die besteht aus TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ und H₄WO₅, auf einer Oberfläche eines Brennstabs des Brennstabbündels,
wobei das Aufbringen der Verbindung umfasst:
Entfernen des Brennstabbündels von Kühlwasser in dem Kernreaktor, und
Sprühen von Flüssigkeit, die die Verbindung enthält, auf das Brennstabbündel, wobei das Kühlwasser über 0,2 ppb Ni-Ion enthält.

3. Verfahren zur Reparatur eines Brennstabbündels in einem Kernreaktor, das umfasst:
Aufbringen einer Verbindung, die mindestens einen Stoff enthält, der aus der Gruppe ausgewählt wird, die besteht aus TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ und H₄WO₅, auf einer Oberfläche eines Brennstabs des Brennstabbündels,
wobei das Aufbringen der Verbindung umfasst:
Vorbereiten von Flüssigkeit, die die Verbindung enthält, in einem Bad,
Entfernen des Brennstabbündels von Kühlwasser in dem Kernreaktor, und
Eintauchen des Brennstabbündels in die Flüssigkeit in dem Bad, wobei das Kühlwasser über 0,2 ppb Ni-Ion enthält.

## Revendications

1. Procédé de réparation d'un assemblage de combustible dans un réacteur nucléaire, comprenant :
l'application d'un composé contenant au moins une substance sélectionnée dans le groupe se composant de TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ et H₄WO₅ sur une surface d'une barre de combustible de l'assemblage de combustible,
dans lequel l'application du composé comprend
la fourniture d'une eau de refroidissement autour de l'assemblage de combustible, et
l'injection d'un liquide contenant le composé dans l'eau de refroidissement, dans lequel l'eau de refroidissement contient plus de 0,2 ppb d'ion Ni.

2. Procédé de réparation d'un assemblage de combustible dans un réacteur nucléaire, comprenant :
l'application d'un composé contenant au moins une substance sélectionnée dans le groupe se composant de TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ et H₄WO₅ sur une surface d'une barre de combustible de l'assemblage de combustible,
dans lequel l'application du composé comprend
le retrait de l'assemblage de combustible d'une eau de refroidissement dans le réacteur nucléaire, et
la pulvérisation d'un liquide contenant le composé sur l'assemblage de combustible, dans lequel l'eau de refroidissement contient plus de 0,2 ppb d'ion Ni.

3. Procédé de réparation d'un assemblage de combustible dans un réacteur nucléaire, comprenant :
l'application d'un composé contenant au moins une substance sélectionnée dans le groupe se composant de TiO₂, TiCl₄, Ti(OH)₄, TiF₄, TiCl₃, TiN, TiC, Ti(SO₄)₂, Ti₃O₅, Ti(NO₃)₄, Al₂O₃, Al(OH)₃, AlCl₃, Al(NO₃)₃, Al₂(SO₄)₃, WO₂, WO₃, WCl₆, WF₆, (NH₄)₁₀W₁₂O₄₁▪5H₂O, H₂WO₄ et H₄WO₅ sur une surface d'une barre de combustible de l'assemblage de combustible,
dans lequel l'application du composé comprend
la préparation d'un liquide contenant le composé dans un bain,
le retrait de l'assemblage de combustible d'une eau de refroidissement dans le réacteur nucléaire, et
l'immersion de l'assemblage de combustible dans le liquide dans le bain, dans lequel l'eau de refroidissement contient plus de 0,2 ppb d'ion Ni.
